# EUROPEAN PATENT APPLICATION

(11) **EP 4 806 658 A1**
(43) Date of publication of application: **16.09.2026**
(21) Application number: 26161892.0
(22) Date of filing: 03.03.2026
(51) Int. Cl.: B41J 2/21

(54) **PRINT POSE ASSESSMENT MECHANISM**

(30) Priority: 12.03.2025 US 202519077865
(71) Applicant: Ricoh Company, Ltd., Tokyo 143-8555 (JP)
(72) Inventor: TERRAB, Soraya, Boulder, CO, 80301-9270 (US); STANICH, Mikel, Boulder, CO, 80301-9270 (US); PREMKUMAR, Pallavi, Boulder, CO, 80301-9270 (US); MANCHESTER, William, Boulder, CO, 80301-9270 (US); ZHANG, Ziling, Boulder, CO, 80301-9270 (US); ZHU, Qingzhao, Boulder, CO, 80301-9270 (US)
(74) Representative: SSM Sandmair

(57) **Abstract**

A printing system is disclosed. The printing system includes: at least one physical memory device to store print element pose correction logic; and one or more processors coupled with the at least one physical memory device to execute the print element pose correction logic to: receive a print image comprising a plurality of locator marks applied to a print medium by one or more pel forming assemblies comprising a plurality of pel forming elements; analyze the plurality of locator marks to determine a skew error of the one of more pel forming assemblies based on the plurality of locator marks; and generate a skew error compensation value to minimize the skew error, wherein the skew error compensation value comprises a compensation amount to be applied to the one or more pel forming element assemblies to compensate for the skew error.

## Description

### FIELD OF THE INVENTION

The invention relates to the field of printing systems, and in particular, to analyzing and correcting print quality in a printing system.

### BACKGROUND

Entities with substantial printing demands typically implement a high-speed production printer for volume printing (e.g., one hundred pages per minute or more). Production printers may include continuous-forms printers that print on a web of print media (or paper) stored on a large roll. A production printer typically includes a print controller that controls the overall operation of the printing system, and a print engine that includes one or more printhead (PH) assemblies, where each assembly includes a printhead controller and a printhead (or array of printheads). Each printhead comprises a plurality of nozzles for the ejection of ink or any colorant suitable for printing on a medium.

### SUMMARY

In one embodiment, a printing system is disclosed. The printing system includes: at least one physical memory device to store print element pose correction logic; and one or more processors coupled with the at least one physical memory device to execute the print element pose correction logic to: receive a print image comprising a plurality of locator marks applied to a print medium by one or more pel forming assemblies comprising a plurality of pel forming elements; analyze the plurality of locator marks to determine a skew error of the one of more pel forming assemblies based on the plurality of locator marks; and generate a skew error compensation value to minimize the skew error, wherein the skew error compensation value comprises a compensation amount to be applied to the one or more pel forming element assemblies to compensate for the skew error.

### BRIEF DESCRIPTION OF THE DRAWINGS

A better understanding of the present invention can be obtained from the following detailed description in conjunction with the following drawings, in which:
Figure 1 is a block diagram of one embodiment of a printing system;
Figures 2A&2B illustrate block diagrams of embodiments of a print controller;
Figure 2C illustrates another embodiment of print element pose correction logic implemented in a network;
Figure 3 illustrates one embodiment of print element pose correction logic;
Figures 4A & 4B illustrate embodiments of a flushline and locator patterns;
Figure 4C illustrates one embodiment of a printhead array;
Figure 4D illustrates one embodiment of a dual head;
Figure 5 illustrates one embodiment detection logic;
Figure 6 is a flow diagram illustrating one embodiment of a locator mark detection process;
Figure 7 illustrates one embodiment of a feature extraction engine;
Figure 8 illustrates one embodiment of a skew processing engine;
Figure 9 is a flow diagram illustrating one embodiment of a process for performing skew processing;
Figure 10 is a flow diagram illustrating another embodiment of process for performing skew processing;
Figure 11 illustrates one embodiment of a position processing engine;
Figure 12 is a flow diagram illustrating one embodiment of a process for performing position processing;
Figure 13 is a flow diagram illustrating another embodiment of process for performing position processing;
Figure 14 is a flow diagram illustrating one embodiment of process for performing interval processing; and
Figure 15 illustrates one embodiment of a computer system.

### DETAILED DESCRIPTION

Various pel forming elements (e.g., nozzles) and/or printheads may become deviated from adjustment specifications during printer operations, which may lead to print quality (PQ) that falls below customer specifications. Print quality is affected by the pose of the printheads and/or printhead arrays in the print system during printing operations. As used herein, pose refers to position and/or orientation (e.g., skew). Currently, PQ assessments must be manually performed and may require approximately two weeks of PQ tuning. For example, conventionally each PQ item requires printing twenty basic charts and using the last (or last two) printed chart(s) to assess a defect using a loupe/digital microscope for a given printhead array (x4: KCMY) and/or individual dual printheads (DH) (x11) per engine (2 engines in printing system considered herein).

For any out-of-specification PQ item, the adjustment is performed either digitally or manually prior to evaluating the next PQ item. For each print engine, there are five adjustment categories for one hundred and twenty different ordered adjustments. There may be about one hundred individual adjustments (e.g., mechanical and digital) that apply down to the DH level. Some digital adjustments are performed for both print engines of a duplex print system simultaneously. In total for both print engines, approximately two hundred individual adjustments may be required.

According to one embodiment, an automated print pose assessment mechanism is provided. In the following description, for the purposes of explanation, numerous specific details are set forth to provide a thorough understanding of the present invention. It will be apparent, however, to one skilled in the art that the present invention may be practiced without some of these specific details. In other instances, well-known structures and devices are shown in block diagram form to avoid obscuring the underlying principles of the present invention.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

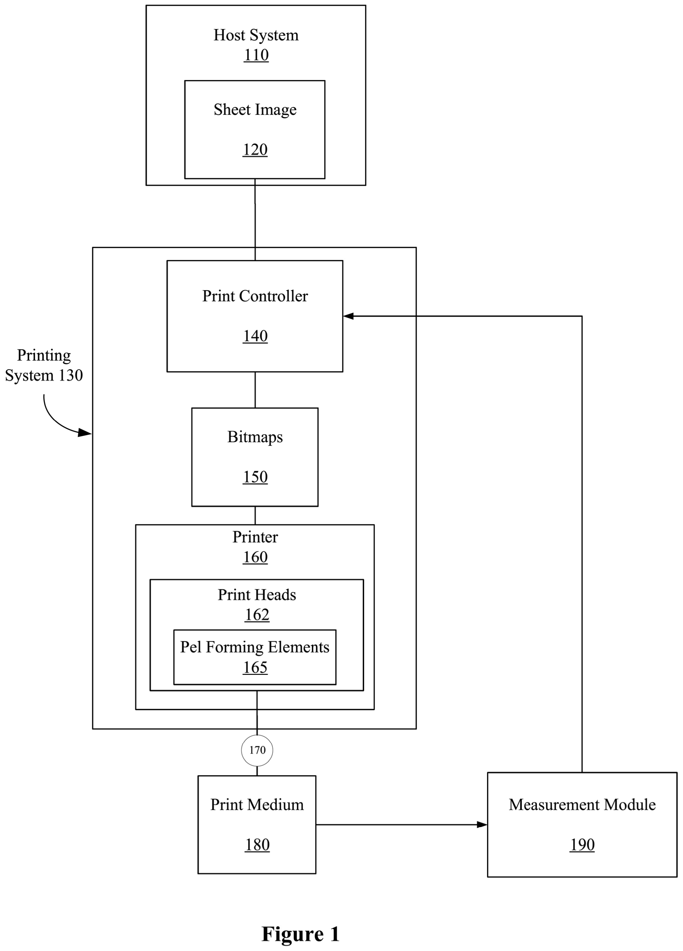

Figure 1 is a block diagram illustrating one embodiment of a printing system 130. A host system 110 is in communication with the printing system 130 to print a sheet image 120 onto a print medium 180 via a printer 160 (e.g., one or more print engines). Print medium 180 may include paper, card stock, paper board, corrugated fiberboard, film, plastic, synthetic, textile, glass, composite or any other tangible medium suitable for printing. The format of print medium 180 may be continuous form or cut sheet or any other format suitable for printing. Printer 160 may be an ink jet, electrophotographic or another suitable printer type having a well-defined association with the amount of marking material deposited in each individual printer picture element (pel or pixel).

In one embodiment, printer 160 comprises one or more printheads 162, each including one or more pel forming elements 165 that directly or indirectly (e.g., by transfer of marking material through an intermediary) forms the representation pels on the print medium 180 with marking material (e.g., ink, paint, toner, polymers and other materials suitable for printing) applied (e.g., deposited) to the print medium. In an ink jet printer, the pel forming element 165 is a tangible device (e.g., an ink jet nozzle) that ejects the ink drop 170 (e.g., marking material elements) onto the print medium 180 and, in an electro-photographic (EP) printer the pel forming element may be a tangible device that determines the location of toner particles printed on the print medium (e.g., an EP exposure LED or an EP exposure laser).

Pel forming elements 165 can be organized into a structure called a pel forming assembly. The genus of pel forming assemblies comprises two species: printheads and printhead arrays. The pel forming elements 165 may be grouped together into one or more printheads 162. One or more printheads 162 may be grouped together into a printhead array. The pel forming elements 165 may be stationary (e.g., as part of a stationary printhead) or moving (e.g., as part of a printhead that moves across the print medium 180) as a matter of design choice. The pel forming elements 165 may be assigned to one or more color planes that correspond to types of marking materials (e.g., Cyan, Magenta, Yellow, and Black (CMYK)).

In a further embodiment, printer 160 is a multi-pass printer (e.g., dual pass, 3 pass, 4 pass, etc.) wherein multiple sets of pel forming elements 165 print the same region of the print image on the print medium 180. The set of pel forming elements 165 may be located on the same physical structure (e.g., an array of nozzles on an ink jet printhead) or separate physical structures. The resulting print medium 180 may be printed in color and/or in any of a number of gray shades, including black and white (CMYK). The host system 110 may include any computing device, such as a personal computer, a server, or even a digital imaging device, such as a digital camera or a scanner.

The sheet image 120 may be any file or data that describes how an image on a sheet of print medium 180 should be printed. For example, the sheet image 120 may include PostScript data, Printer Command Language (PCL) data, and/or any other printer language data. The print controller 140 processes the sheet image to generate a bitmap 150 for transmission. Bitmap 150 may be a halftoned bitmap for printing to the print medium 180. The printing system 130 may be a high-speed production printer operable to print relatively high volumes (e.g., greater than 100 pages per minute).

The print medium 180 may be continuous form paper, cut sheet paper, and/or any other tangible medium suitable for printing. The printing system 130, in one generalized form, includes the printer 160 that presents the bitmap 150 onto the print medium 180 (e.g., via toner, ink, etc.) based on the sheet image 120. Although shown as a component of printing system 130, other embodiments may feature printer 160 as an independent device communicably coupled to print controller 140. The print medium 180 is transported from the entrance to the exit of printer 160 in the web movement direction during printing. The cross web direction is perpendicular to the web movement direction and is across the print medium 180. In print systems mentioned above where a part of the printhead 162 moves across the print medium 180, the printhead 162 moves in the cross web direction.

The print controller 140 may be any system, device, software, circuitry and/or other suitable component operable to transform the sheet image 120 for generating the bitmap 150 in accordance with printing onto the print medium 180. In this regard, the print controller 140 may include processing and data storage capabilities. In one embodiment, measurement module 190 is implemented as part of print quality systems to obtain measurements of the printed medium 180. The measured results are communicated to print controller 140 to be used as a part of print quality systems. The measurement module 190 may be a stand-alone system communicably coupled to printing system 130 or be integrated into the printing system 130.

According to one embodiment, measurement module 190 may be a sensor to take measurements of printed images on print medium 180. Measurement module 190 may generate and transmit print image measurement data. Print image measurement data may be color response (e.g., spectral, RGB, optical density, etc.) data corresponding to a printed image that is either raw or processed. The intensity value at a pixel location in the print image measurement data corresponds to the color response at a corresponding pixel location on the print medium. In one embodiment, measurement module 190 may comprise one or more sensors that each or in total take measurements for printed markings produced for some or all pel forming elements 165.

In another embodiment, measurement module 190 may be a camera system, in-line scanner, densitometer or spectrophotometer. In a further embodiment, print image measurement data may include map information to correlate portions (e.g., a pel or plurality of pels) of the print image data to the corresponding pel forming elements 165 that produced the portions of the printed images.

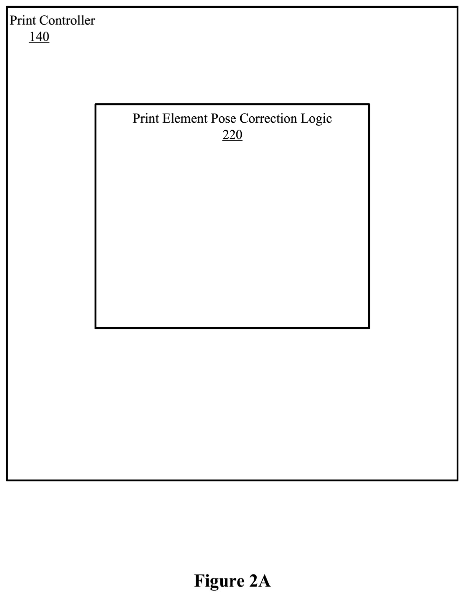

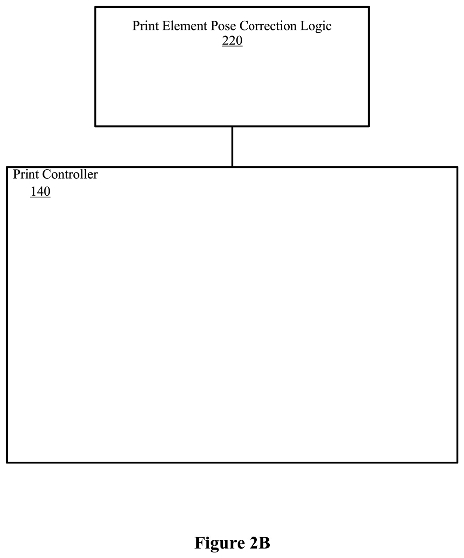

Figures 2A&2B illustrate embodiments implementing print controller 140. Figure 2A illustrates a print controller 140 (e.g., DFE or digital front end), in its generalized form, including print element pose correction logic 220. Figure 2B illustrates an embodiment which is coupled externally to print controller 140. In either embodiment, the separate components may represent hardware used to implement the print controller 140. Alternatively, or additionally, the separate components may represent logical blocks implemented by executing software instructions in a processor of the printer controller 140.

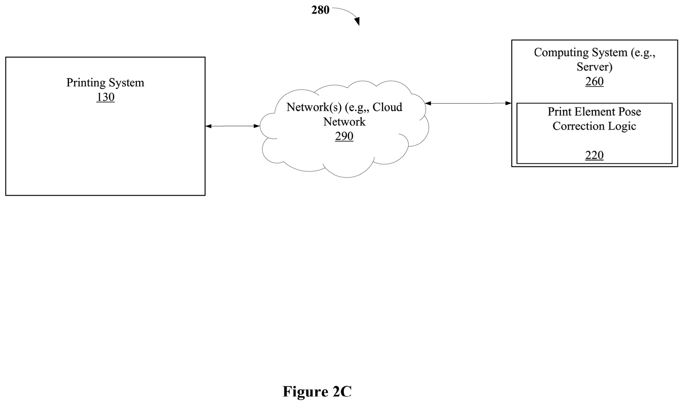

Although shown as a component within a print controller 140, other embodiments may feature print element pose correction logic 220 included within independent devices, or combination of devices, communicably coupled to print controller 140. For instance, Figure 2C illustrates one embodiment of print element pose correction logic 220 implemented in a network 280. As shown in Figure 2C, print element pose correction logic 220 is included within a computing system 260 and transmits data to printing system 130 via a cloud network 290.

According to one embodiment, print element pose correction logic 220 receives a print image comprising a plurality of locator marks applied to a print medium by a plurality of pel forming elements and a plurality of printheads comprising a printhead array, analyzes the plurality of locator marks to determine a position error of the plurality of locator marks based on the received print image and generates a position error compensation value to minimize the position error, wherein the position error compensation value comprises a compensation amount to be applied to the one or more of the plurality of printheads to compensate for the position error. Resulting technical benefits include generating position error compensation.

In an alternative embodiment, pose correction logic 220 receives a print image comprising a plurality of locator marks applied to a print medium by one or more pel forming assemblies comprising a plurality of pel forming elements, analyzes the plurality of locator marks to determine a skew error of the one of more pel forming assemblies based on the plurality of locator marks; and generates a skew error compensation value to minimize the skew error, wherein the skew error compensation value comprises a compensation amount to be applied to the one or more pel forming element assemblies to compensate for the skew error. Resulting technical benefits include generating skew error compensation.

In a further embodiment, print element pose correction logic 220 receives a print image (e.g., print image measurement data for a test image) including a flushline pattern having flush bars (or evaluation marks) and locator marks (or locators) applied to print medium 180 by pel forming elements 165 according to print instructions. In such an embodiment, print element pose correction logic 220 extracts PQ features (e.g., position and/or skew) and performs PQ assessments (e.g., measurements and the amount of deviation from specifications) based on the locator marks.

A flushline pattern comprises markings on the print medium used to prevent clogging of pel forming elements 165 due to inactivity by causing each of the pel forming elements 165 to eject ink drops 170 at a rate that avoids clogging. Typically, the flushline pattern is a repeating print pattern placed on each page/sheet at the top or bottom of the page/sheet and in addition to the original print job data (e.g., text or images) on each page/sheet. As will be further explained below, locator marks comprise markings (e.g., printed pels) on print medium 180 associated with individual pel forming elements 165 that produced the markings, wherein the individual locator marks are spaced apart in a predefined distance in a cross web direction. By design, there is a known mapping of the instructed locator marks to expected positions on the printed paper, and further to nozzles, pel forming element arrays, printheads and printhead arrays that produce the locator marks.

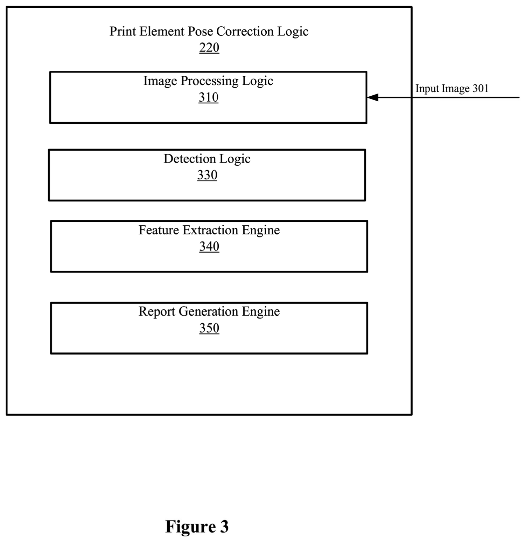

Figure 3 illustrates one embodiment of print element pose correction logic 220. As shown in Figure 3, print element pose correction logic 220 includes image processing logic 310, detection logic 330, feature extraction engine 340 and report generation engine 350. Image processing logic 310 performs processing of a received image. In such an embodiment, image processing logic 310 receives an input image 301 for a print pattern including the flushline patterns and/or locator marks.

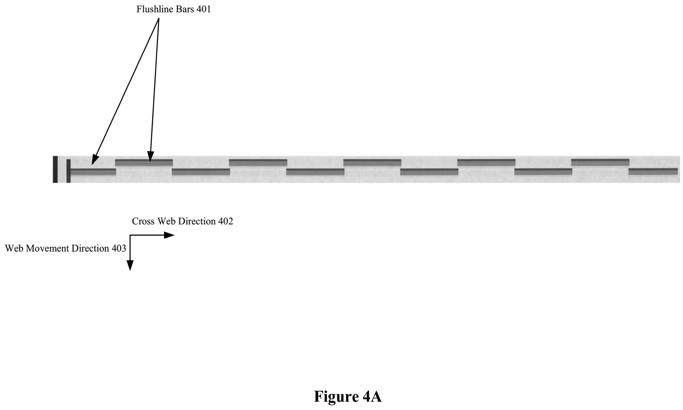

In conventional applications, the print pattern is designed to identify pel forming element 165 locations (e.g., pel forming element 165 of the array of pel forming elements) associated with print defects (e.g., jet-outs and/or deviated jets). However, in embodiments, the print pattern is implemented to extract PQ features. In one embodiment, a flushline pattern includes '*C* × *n'* row of flush bars, where the constant "*C*" indicates the number of printheads 162. For example, a dual printhead system includes two printheads 162 that combine to print one area, hence *C* = 2. The variable '*n*' specifies the number of rows printed by each printhead type. For example, a '2 × 2' row flushline pattern indicates a dual printhead system that places flush bars into four rows, in which the flush bars of each row are printed by pel forming element groups of either printheads 162. Figure 4A illustrates one embodiment of a flushline pattern on a print medium 180. As shown in Figure 4A, the flushline pattern includes flushline bars 401 (e.g., flushline marks), applied in the cross web direction 402 (e.g., x-direction, or scan direction) and web movement direction 403 (e.g., y direction, or process direction).

In a further embodiment, locator marks are printed by each printhead 162 (e.g., 11) for each of the plurality of color planes at each print engine (e.g., 2) to provide pose data (e.g., geometric data) for each printhead. Accordingly, this data provides the cross-web position, process direction position, and tilt/skew rotation due to any clockwise/counterclockwise rotation of the printhead array or individual printheads relative to the cross-web direction axis.

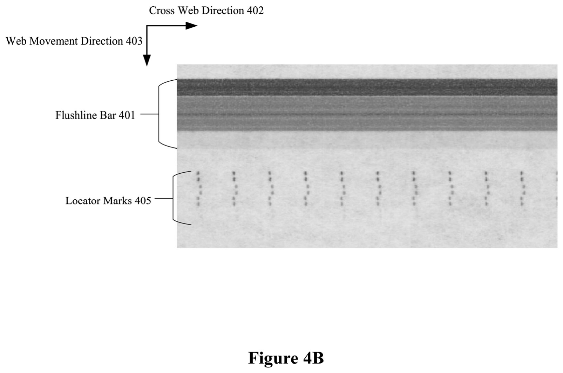

Figure 4B illustrates one embodiment of locator marks 405 that are printed below flushline bars 401 on a print medium 180. However, in other embodiments, locator marks 405 may be printed above flushline bars 401. As shown in Figure 4B, the inset of the locator marks 405 indicate PQ items that are out of specification (e.g., CMY cross-machine position relative to K).

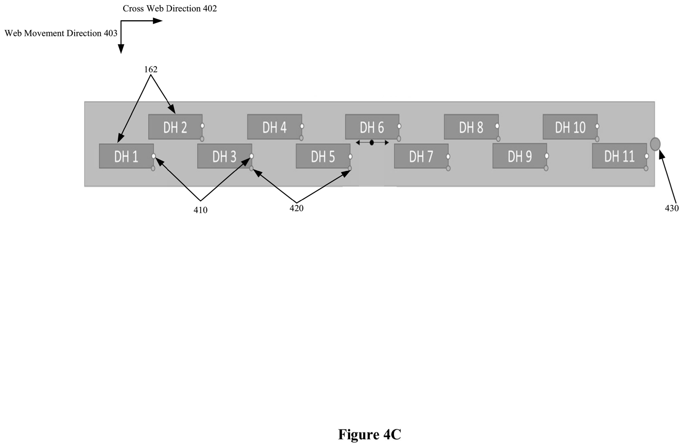

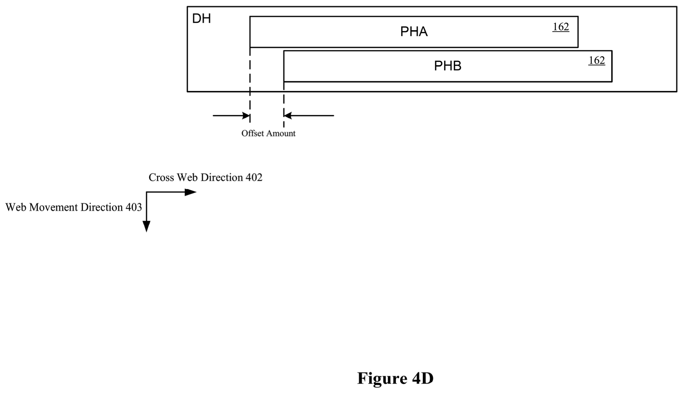

Figure 4C illustrates one embodiment of a printhead 165 array. As shown in Figure 4C, the printhead 165 array includes dual heads DH1 - DH11, each having a printhead reference/stationary pivot point 410 for DH skew adjustment and a printhead x-adjustment 420 for DH horizontal-direction shift. Where the x direction is along the cross web direction. Additionally, the printhead 165 array includes a stationary rotational pivot point 430 for printhead array skew adjustment. Figure 4D illustrates one embodiment of a 1200 dpi dual printhead DH comprising of two printheads 165 (e.g., two 600 dpi printheads PHA and PHB which are offset by 1/1200 inch). Unless specified otherwise herein, references to printheads 162 (printheads) may refer to both dual printheads DH or single printheads (e.g., PHA and PHB).

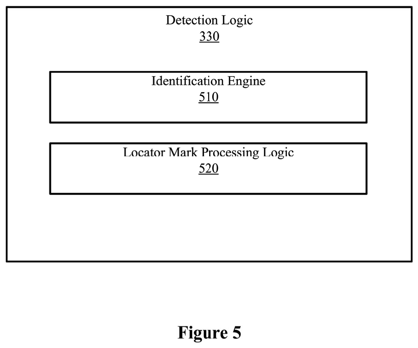

Detection logic 330 is implemented to detect locator marks in input image 301. Figure 5 illustrates one embodiment of detection logic 330 including identification engine 510 and locator mark processing logic 520. Identification engine 510 uses the flushline bars 401 and locator marks 405 to extract a region of interest (ROI). In such an embodiment, identification engine 510 first identifies flushline bars 401 by separating the KCM flushline bars 401 from the Y flushline bars 401 using a green channel of input image 301, which distinguishes adjacent printhead regions from one another. Identification engine 510 subsequently searches the ROI for the locator marks 405 above/below a flushline bar 401 for smaller locator mark 405 locator mark regions. In one embodiment, adjacent printheads 162 for first dual head (e.g., DH1) on a first print engine and the last dual head (e.g., DH11) are used as reference given that cue marks cover printhead 162 contours, where cue marks are fiducial marks printed near the edge of a page.

In a further embodiment, locator mark 405 regions are separated by color plane. This process is performed using an expected position (e.g., KCMY from top to bottom and a forty-eight pel tall region per color plane) and different color channels (e.g., green for K and M, red for C, and blue for Y). The sub-pixel center of each locator mark is identified using a center of mass/centroid method, which is then converted to an integer pixel/nozzle location at twice the resolution (e.g., 1200 dpi) while accounting for paper shrinkage. Resulting technical benefits include determining positions of the locator marks accurately. Next, identification engine 510 separates the locator marks 405 for a given color plane by single printheads 162 for each print engine (e.g., locator marks 405 for a smaller y or row value in input image 301 (A locator marks) and locator marks 405 for the larger y/row value (B locator marks)), where y is along the web movement direction.

Locator mark processing logic 520 detects the A/B locator marks 405 for each color plane and determines positions for each of the plurality of locator marks. Locator mark processing logic 520 may also perform an additional processing to verify any redundancy within locator marks 405 and any missing locator marks 405. Through this final process, the locator marks are labeled based on their location in the expected sequence of 80-pel spaced locator marks. A corresponding labeling is used across A/B locators to ensure that a pairwise association exists for A locators and B locators with the same label identifier. The above process enables the centroid location (or center points) of all locator marks 405 to be identified, which enables PQ feature extraction to be performed. Resulting technical benefits include establishing points of reference based on printed locator marks.

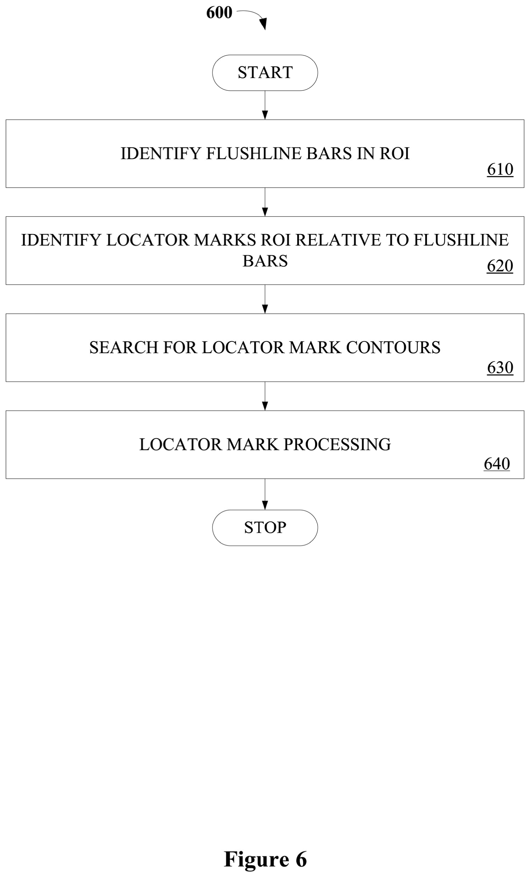

Figure 6 is a flow diagram illustrating one embodiment of a locator mark detection process 600. Process 600 may be performed by processing logic that may include hardware (e.g., circuitry, dedicated logic, programmable logic, microcode, etc.), software such as instructions run on a processing device, or a combination thereof. In one embodiment, process 600 is performed by detection logic 330.

According to one embodiment, process 600 begins at processing block 610, where flushline bars 401 in a ROI are identified. At processing block 620, locator marks 405 are identified relative to the flushline bars 401. At processing block 630, locator marks are searched and identified. At processing block 640, locator mark 405 processing is performed for each printhead 165 for each color plane. As discussed above, locator mark 405 processing comprises measuring sub-pixel center mark location using a centroid method, converting data to 1200 dpi accounting for effect of shrinkage, sorting A/B locator marks 405, verifying any redundant or missing locators using gap spacing and labelling locator marks 405 with pairwise correspondence for A/B locators.

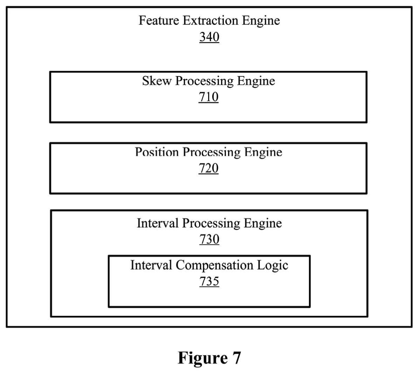

Referring back to Figure 3, feature extraction engine 340 is implemented to extract and analyze PQ features based on locator marks 405. Figure 7 illustrates one embodiment of feature extraction engine 340. As shown in Figure 7, feature extraction engine 340 includes skew processing engine 710, position processing engine 720 and interval processing engine 730. Skew processing engine 710 performs PQ feature extraction based on locator mark 405 centroid locations to analyze (or assess) the skew (e.g., tilt) of a printhead 162 and array of individual printheads 162.

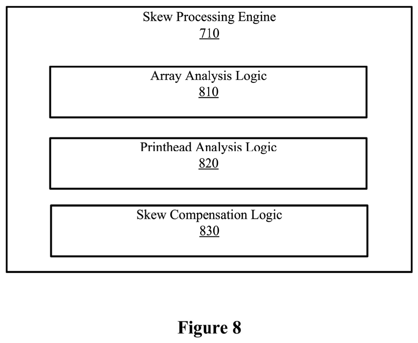

Figure 8 illustrates one embodiment of a skew processing engine 710 including array analysis logic 810 to analyze the locator mark 405 to assess skew (or tilt) of a printhead array and printhead analysis logic 820 to assess individual printheads 162 to determine a skew error (if any) associated with each individual printhead 162. Given the alternating positions of the locator marks 405 (e.g., above/below a flushline bar 401 in a particular printhead 162), array analysis logic 810 considers locator marks 405 from odd printheads 1, 3, ..., 9, 11.

In one embodiment, a line is fit about two of more of the locator mark 405 centers (e.g., A/B locator mark centers) and an average slope (mean slope) wherein the average slope is calculated as the average of the slopes of a plurality of the A/B fitted lines. Resulting technical benefits include determining slope based on the locator marks accurately wherein the slope is a basis for later skew processing. Array analysis logic 810 computes a skew error as a y-direction distance deviation between two printheads (e.g., a first printhead and a second printhead or DH 1 and DH11) from the mean slope m: dy = m * dx, where dx is approximately the x-direction distance between the centers of the two printheads (e.g., approximate given that it is based on the current human-based PQ assessment which relies on off-center DH1 to DH11 measurements). As used herein, the term A/B locator marks refers to locator marks 405 produced by one or more printheads or in the case of a dual printhead DH, to locator marks 405 produced by each of two printheads PHA and PHB that comprise a printhead DH. In one embodiment, the locator marks for skew assessment are chosen as locator marks separated from each other on the printed paper and correspond to the same printing device that is being assessed for skew. Preferentially, the chosen locator marks correspond to ink nozzles located at or near each end of the printing device that is being assessed for skew. This results in a technical benefit of increased skew assessment accuracy.

Skew compensation logic 830 generates a skew error compensation value that indicates an adjustment that is to be performed to compensate for the printhead 162 array skew. In one embodiment, skew compensation logic 830 converts the y-direction deviation to a rotation angle to generate the required rotational adjustment of an adjustment screw (e.g., quantized to the nearest 15 degrees) to achieve the ideal position. Resulting technical benefits include conversion to adjustment units that are compatible with the adjustment method.

The above process may apply for any color plane, and thus may correct for any absolute KCMY array skew in parallel. However, the current human-based PQ relies on a y-direction difference between CMY relative to K from DH 1 to DH 11. In a further embodiment, relative slopes of CMY printhead arrays relative to the K printhead array are computed and the associated y-direction displacements are measured to provide an analogous measurement. The absolute skew measurement for KCMY simplifies the current PQ by considering one print job for four adjustments at once, rather than a second print job to check CMY relative to K.

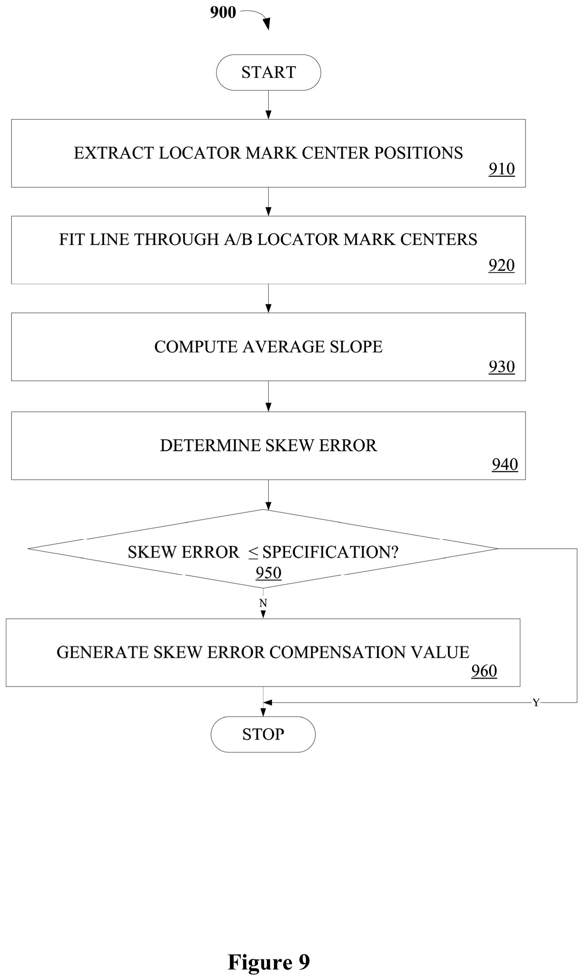

Figure 9 is a flow diagram illustrating one embodiment of a process 900 for performing skew processing of a printhead array. Process 900 may be performed by processing logic that may include hardware (e.g., circuitry, dedicated logic, programmable logic, microcode, etc.), software such as instructions run on a processing device, or a combination thereof. In one embodiment, process 900 is performed by array analysis logic 810.

According to one embodiment, process 900 begins at processing block 910, where locator mark 405 center positions are extracted for odd printheads 165. At processing block 920 a line is fit through A/B locator mark centers. At processing block 930, an average slope m (or measure of relative slope of CMY relative to slope of K) is determined for the fitted lines. A processing block 940, a y-direction deviation (dy), is determined as the skew error. At decision block 950, a determination is made as to whether the skew error is less than or equal to the specification. If not, a skew error compensation value is generated (e.g., an adjustment angle or other adjustment amount), processing block 960. The skew error compensation value may then be transmitted, stored in shared memory or otherwise made available to the operator or printing system 130 for application to the printing system 130. Otherwise, the assessment has passed and the process has been completed.

For individual printhead 162 skew, printhead analysis logic 820 uses line fitting to compute the slope of the A/B locator mark at the individual printhead level in a similar manner and with similar technical benefits to array analysis logic 810 computation of printhead array slope. Subsequently, the slope is computed as the average of the two respective slopes and converted to an angle (phi). In one embodiment, the printhead tilt (phi) is used to compute a crosshair deviation as the skew error with resulting technical benefits that include providing a reference for printhead skew. In such an embodiment, the crosshair deviation comprises an off-center deviation of one crosshair relative to the other in a nozzle spacing (e.g., 6 nozzles) with the center crosshair printed by a different single head compared to the other crosshair. The nominal spacing between crosshairs is thus 3 pels and with a one pel y-direction spacing between the crosshair dots, the dots are at an angle (e.g., theta = arctan(1/3)). Introducing the printhead tilt angle, the crosshair deviation (x- x') is measured as: $x - x ′ = 3 - sqrt \left({3}^{∧}2+{1}^{∧}2\right) * cos \left(theta+phi\right) = 3 - sqrt \left(10\right) * cos \left(theta+phi\right) .$

In one embodiment, a correction is to be performed whenever the crosshair deviation is greater than a predetermined tolerance (e.g., |x-x'| > 7 um). In a further embodiment, a printhead 162 screw rotation of 45 degrees counterclockwise is considered to move the center crosshair to the left by 15 um. Thus, skew compensation logic 830 generates a skew compensation value by converting the computed crosshair deviation to an adjustment angle to the nearest 15 degrees. Resulting technical benefits include conversion to adjustment units that are compatible with the adjustment method.

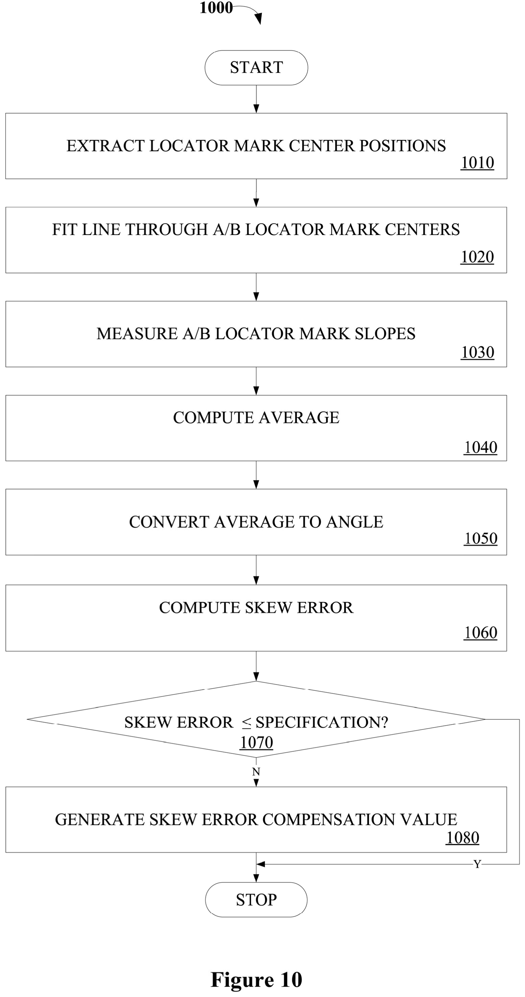

Figure 10 is a flow diagram illustrating one embodiment of a process 1000 for performing skew processing of a printhead. Process 1000 may be performed by processing logic that may include hardware (e.g., circuitry, dedicated logic, programmable logic, microcode, etc.), software such as instructions run on a processing device, or a combination thereof. In one embodiment, process 1000 is performed by printhead analysis logic 820.

Process 1000 begins at processing block 1010, where locator marks 405 (e.g., A/B locator marks) center positions are extracted. At processing block 1020 a line is fit through the locator mark centers. At processing block 1030, A/B locator mark slopes are measured via line fitting. At processing block 1040, an average of the fitted line slopes is computed. At processing block 1050, the average slope is converted to an angle (phi). At processing block 1060, the crosshair deviation is computed as the skew error. At decision block 1070, a determination is made as to whether the skew error is less than or equal to the specification. If not, a skew error compensation value is generated, processing block 1080. The skew error compensation value may then be transmitted, stored in shared memory or otherwise made available to the operator or printing system 130 for application to the printing system 130. Otherwise, the assessment has passed and the process has been completed.

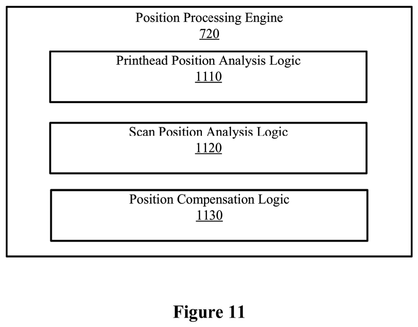

Referring back to Figure 7, position processing engine 720 performs PQ feature extraction for individual printhead 165 cross-web direction position. Figure 11 illustrates one embodiment of a position processing engine 720 including printhead position analysis logic 1110 to analyze the locator marks 405 to assess printhead 162 position and scan position analysis logic 1120 to assess cross-web direction position to determine a position error (if any).

Printhead position analysis logic 1110 performs measurements to determine any position error (e.g., overlap or gap) (e.g., dx) between positions of adjacent printheads (e.g., first printhead and second print head) based on the scan direction positions of the corresponding locator marks. In other words, determining position error comprises comparing positions of first locator marks associated with the first printhead and positions of second locator marks associated with the second printhead. Resulting technical benefits include matching direction of relevant measurements to the intended direction of adjustments. According to one embodiment, the spacing between the border locator marks 405 is measured relative to the expected spacing (e.g., of 160- 2 (24 overlap nozzles) = 112 pels). In such an embodiment, a position deviation (e.g., dx-112) is computed as position error based on the measurement and compared against a predetermined tolerance (e.g., 5 um). Position compensation logic 1130 generates a position error compensation value by converting an out-of-specification position error to a screw rotation (e.g., to the nearest 15 degrees, given a 45 degree screw rotation produces a 50 um displacement).

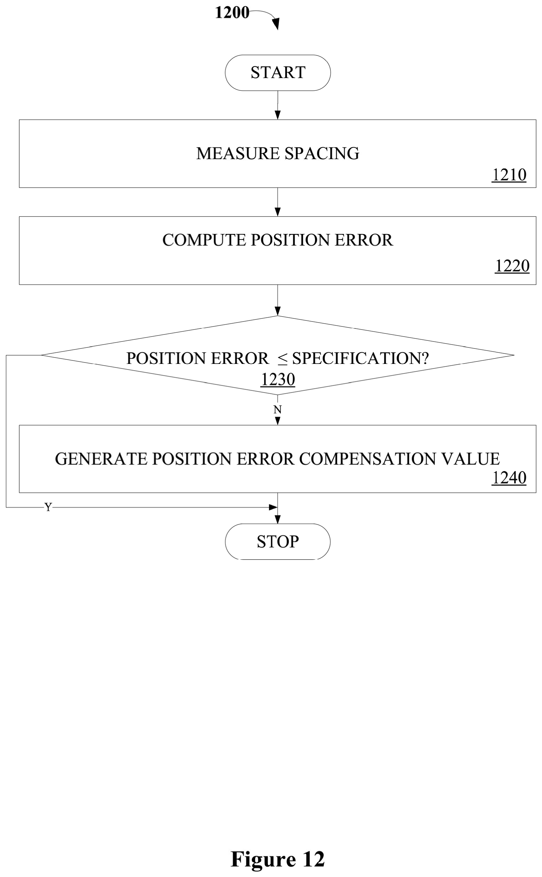

Figure 12 is a flow diagram illustrating one embodiment of a process 1200 for performing position processing. Process 1200 may be performed by processing logic that may include hardware (e.g., circuitry, dedicated logic, programmable logic, microcode, etc.), software such as instructions run on a processing device, or a combination thereof. In one embodiment, process 1200 is performed by printhead position analysis logic 1110.

At processing block 1210, the spacing between border locator marks of adjacent printheads 162 is measured. At processing block 1220, a deviation is computed as the position error. At decision block 1230, a determination is made as to whether the position error is less than or equal to a tolerance. If not, a position error compensation value is generated, processing block 1240. The position error compensation value may then be transmitted, stored in shared memory or otherwise made available to the operator or printing system 130 for application to the printing system 130. Otherwise, the assessment has passed and the process has been completed.

Referring back to Figure 11, scan position analysis logic 1120 analyzes locator marks associated with a first printhead 162 for a first print engine (or engine 1) and locator marks associated with a last printhead 162 at a second print engine (or engine 2) to determine main scan position error. In one embodiment, position error comprises an error between printhead array position (e.g., the positions of a plurality of locator marks) and a target position. In another embodiment for the K main scan position, scan position analysis logic 1120 computes a mean scan direction location difference of A/B locator marks relative to true (e.g., the target is true) as the position error. Resulting technical benefits include establishing a relevant target for position error determination.

In one embodiment, this measurement is subsequently biased by a true flushline placement (390 pels) relative to print medium edge, which provides an actual offset from the expected position. Position compensation logic 1130 generates a position error compensation value as a suggested correction upon a determination that the offset is greater than a threshold (e.g., 0.2 mm).

In a further embodiment, the position error comprises an error between a position of a first color plane with a position of a second color plane. In other words, determining the position error comprises comparing positions of first locator marks associated with the first color plane with positions of second locator marks associated with the second color plane. In another embodiment or the CMY main scan position, scan position analysis logic 1120 determines a relative difference in position for a color plane relative to K (K is the target) in the scan direction. Accordingly, the position error is computed as a mean difference of the scan direction positions of the CMY locator marks relative to the K locator marks. Position compensation logic 1130 generates a position error compensation value that indicates a quantity (e.g., digitally by a corresponding value in millimeters) that a main scan position of the color plane is to be adjusted upon a determination that the difference is greater than 1 pel. Resulting technical benefits include determining position error relevant to color plane position misalignment.

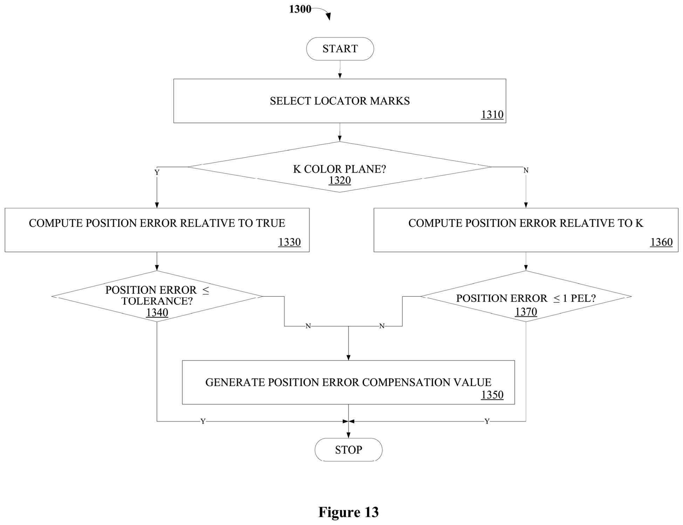

Figure 13 is a flow diagram illustrating another embodiment of process 1300 for performing scan position processing. Process 1300 may be performed by processing logic that may include hardware (e.g., circuitry, dedicated logic, programmable logic, microcode, etc.), software such as instructions run on a processing device, or a combination thereof. In one embodiment, process 1300 is performed by scan position analysis logic 1120.

At processing block 1310, locator marks are selected (e.g., locator marks for a first printhead 162 at engine 1 and for a last printhead 162 at engine 2). At decision block 1320, a determination is made as to whether the selected locator marks are associated with the K main scan position. If so, a mean scan direction position difference of the locator marks (dx) relative to true is computed as the position error, processing block 1330. At decision block 1340, a determination is made as to whether the position error is less than or equal to a tolerance. If not, a position error compensation value is generated, processing block 1350. Otherwise, the assessment has passed and the process has been completed.

Upon a determination at decision block 1320 that the selected locator marks are associated with a CMY main scan position, the position error is computed relative to K, processing block 1360. At decision block 1360, a determination is made as to whether the position error is less than or equal to one pel. If so, control is returned to processing block 1350, where the position error compensation value is generated. Otherwise, control is returned processing block 1350 where the process has been completed.

Referring back to Figure 7, interval processing engine 730 performs a PQ assessment for CMY timing and color interval. In one embodiment, interval processing engine 730 computes a mean y-direction difference (dy) of the locator marks relative to K across all printheads 165 as an interval error. Interval processing engine 730 subsequently compares the mean y-direction difference to expected separation (e.g., 48 pels for K-C, 2x48 pels for K-M, and 3x48 pels for K-Y). Interval processing engine 730 includes interval compensation logic 735 that generates a value that indicates that a deviation is to be corrected upon a determination that the deviation between the mean y-direction difference and the expected separation exceeds a tolerance (e.g., 0.1 mm).

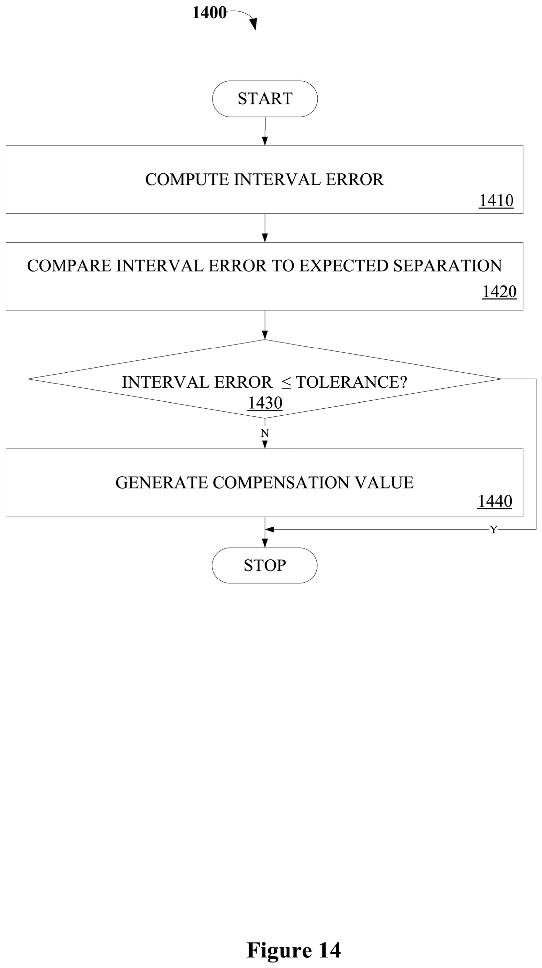

Figure 14 is a flow diagram illustrating one embodiment of process 1400 for performing interval processing. Process 1400 may be performed by processing logic that may include hardware (e.g., circuitry, dedicated logic, programmable logic, microcode, etc.), software such as instructions run on a processing device, or a combination thereof. In one embodiment, process 1400 is performed by interval processing engine 730.

At processing block 1410, dy is computed as an interval error. At processing block 1420, the interval error is compared to an expected separation. At decision block 1430, a determination is made as to whether the interval error is less than or equal to a tolerance. If not, a compensation value is generated to provide an adjustment, processing block 1440. Otherwise, the assessment has passed and the process has been completed.

Referring back to Figure 3, report generation engine 350 generates a PQ report that includes a summary of the PQ assessments performed. In one embodiment, the report comprises a Hypertext Markup Language (HTML) report that indicates adjustments for all color planes for each print engine that are to be performed based on the above-described PQ assessments. In this embodiment, each individual adjustment category is also detailed. For example, adjustment categories may include: printhead array for a given engine and color plane (tilt/skew, position, timing); individual printheads for a given engine and color plane (tilt/skew and position). In a further embodiment, the PQ data is also saved at print controller 140 (e.g., as a JavaScript Object Notation (JSON) file) and may then be displayed or transmitted.

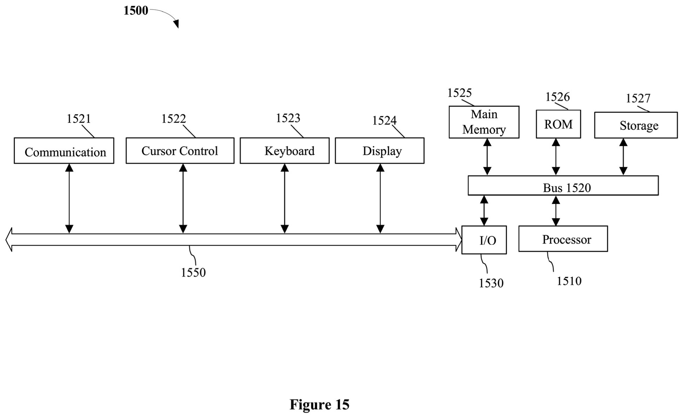

Figure 15 illustrates a computer system 1500 on which printing system 130, print controller 140 and/or print element pose correction logic 220 may be implemented. Computer system 1500 includes a system bus 1520 for communicating information, and a processor 1510 coupled to bus 1420 for processing information.

Computer system 1500 further comprises a random access memory (RAM) or other dynamic storage device 1525 (referred to herein as main memory), coupled to bus 1520 for storing information and instructions to be executed by processor 1510. Main memory 1525 also may be used for storing temporary variables or other intermediate information during execution of instructions by processor 1510. Computer system 1500 also may include a read only memory (ROM) and/or other static storage device 1526 coupled to bus 1520 for storing static information and instructions used by processor 1510.

A data storage device 1527 such as a magnetic disk or optical disc and its corresponding drive may also be coupled to computer system 1500 for storing information and instructions. Computer system 1500 can also be coupled to a second I/O bus 1550 via an I/O interface 1530. A plurality of I/O devices may be coupled to I/O bus 1550, including a display device 1524, an input device (e.g., an alphanumeric input device 1523 and/or a cursor control device 1522). The communication device 1521 is for accessing other computers (servers or clients). The communication device 1521 may comprise a modem, a network interface card, or other well-known interface device, such as those used for coupling to Ethernet, token ring, or other types of networks.

Embodiments of the invention may include various steps as set forth above. The steps may be embodied in machine-executable instructions. The instructions can be used to cause a general-purpose or special-purpose processor to perform certain steps. Alternatively, these steps may be performed by specific hardware components that contain hardwired logic for performing the steps, or by any combination of programmed computer components and custom hardware components.

Elements of the present invention may also be provided as a machine-readable medium for storing the machine-executable instructions. The machine-readable medium may include, but is not limited to, floppy diskettes, optical disks, CD-ROMs, and magneto-optical disks, ROMs, RAMs, EPROMs, EEPROMs, magnetic or optical cards, propagation media or other type of media/machine-readable medium suitable for storing electronic instructions. For example, the present invention may be downloaded as a computer program which may be transferred from a remote computer (e.g., a server) to a requesting computer (e.g., a client) by way of data signals embodied in a carrier wave or other propagation medium via a communication link (e.g., a modem or network connection).

The following clauses and/or examples pertain to further embodiments or examples. Specifics in the examples may be used anywhere in one or more embodiments. The various features of the different embodiments or examples may be variously combined with some features included and others excluded to suit a variety of different applications. Examples may include subject matter such as a method, means for performing acts of the method, at least one machine-readable medium including instructions that, when performed by a machine cause the machine to perform acts of the method, or of an apparatus or system according to embodiments and examples described herein.0301]Some embodiments pertain to Example 1 that includes a system comprising at least one physical memory device to store print element pose correction logic and one or more processors coupled with the at least one physical memory device to execute the print element pose correction logic to receive a print image comprising a plurality of locator marks applied to a print medium by one or more pel forming assemblies comprising a plurality of pel forming elements, analyze the plurality of locator marks to determine a skew error of the one of more pel forming assemblies based on the plurality of locator marks and generate a skew error compensation value to minimize the skew error, wherein the skew error compensation value comprises a compensation amount to be applied to the one or more pel forming element assemblies to compensate for the skew error.

Example 2 includes the subject matter of Example 1, wherein determining the skew error comprises determining positions for each of the plurality of locator marks.

Example 3 includes the subject matter of Examples 1 and 2, wherein determining the skew error further comprises fitting a line through two or more locator marks and computing average slope values.

Example 4 includes the subject matter of Examples 1-3, wherein the average slope values comprise an average of slopes of the fitted lines.

Example 5 includes the subject matter of Examples 1-4, wherein the fitted line is fit through center positions of the two or more locator marks.

Example 6 includes the subject matter of Examples 1-5, wherein determining the skew error further comprises computing a skew error based on the average slope.

Example 7 includes the subject matter of Examples 1-6, wherein the one or more pel forming assemblies comprise one or more printhead arrays and the skew error comprises a distance deviation between a center of a first printhead and a center of a second printhead.

Example 8 includes the subject matter of Examples 1-7, wherein the one or more pel forming assemblies comprise a plurality of printheads and the skew error comprises a difference between the off-center deviation of one of the plurality of printheads to the off-center deviation of another one of the plurality of printheads.

Example 9 includes the subject matter of Examples 1-8, wherein determining the skew error further comprises converting the average slope to an angle.

Example 10 includes the subject matter of Examples 1-9, wherein determining the skew error further comprises computing a crosshair deviation as a skew error based on the angle.

Example 11 includes the subject matter of Examples 1-10, further comprising a printer to apply the plurality of locator marks to the print medium.

Some embodiments pertain to Example 12 that includes a method comprising receiving a print image comprising a plurality of locator marks applied to a print medium by one or more pel forming assemblies comprising a plurality of pel forming elements, analyzing the plurality of locator marks to determine a skew error of the one of more pel forming assemblies based on the plurality of locator marks and generating a skew error compensation value to minimize the skew error, wherein the skew error compensation value comprises a compensation amount to be applied to the one or more pel forming element assemblies to compensate for the skew error.

Example 13 includes the subject matter of Example 12, wherein determining the skew error comprises determining positions for each of the plurality of locator marks.

Example 14 includes the subject matter of Example 12 and 13, wherein determining the skew error further comprises fitting a line through two or more locator marks and computing average slope values.

Example 15 includes the subject matter of Example 12-14, wherein the average slope values comprise an average of slopes of the fitted lines.

Example 16 includes the subject matter of Examples 12-15, wherein the fitted line is fit through center positions of the two or more locator marks.

Some embodiments pertain to Example 17 that includes at least one computer readable medium having instructions stored thereon, which when executed by one or more processors, cause the processors to receive a print image comprising a plurality of locator marks applied to a print medium by one or more pel forming assemblies comprising a plurality of pel forming elements, analyze the plurality of locator marks to determine a skew error of the one of more pel forming assemblies based on the plurality of locator marks and generate a skew error compensation value to minimize the skew error, wherein the skew error compensation value comprises a compensation amount to be applied to the one or more pel forming element assemblies to compensate for the skew error.

Example 18 includes the subject matter of Example 17, wherein determining the skew error comprises determining positions for each of the plurality of locator marks.

Example 19 includes the subject matter of Examples 17 and 18, wherein determining the skew error further comprises fitting a line through two or more locator marks and computing average slope values.

Example 20 includes the subject matter of Examples 17-19, wherein the average slope values comprise an average of slopes of the fitted lines.

Whereas many alterations and modifications of the present invention will no doubt become apparent to a person of ordinary skill in the art after having read the foregoing description, it is to be understood that any particular embodiment shown and described by way of illustration is in no way intended to be considered limiting. Therefore, references to details of various embodiments are not intended to limit the scope of the claims, which in themselves recite only those features regarded as essential to the invention.

## Claims

1. A system comprising:
at least one physical memory device to store print element pose correction logic; and
one or more processors coupled with the at least one physical memory device to execute the print element pose correction logic to:
receive a print image comprising a plurality of locator marks applied to a print medium by one or more pel forming assemblies comprising a plurality of pel forming elements;
analyze the plurality of locator marks to determine a skew error of the one of more pel forming assemblies based on the plurality of locator marks; and
generate a skew error compensation value to minimize the skew error,
wherein the skew error compensation value comprises a compensation amount to be applied to the one or more pel forming element assemblies to compensate for the skew error.

2. The system of claim 1, wherein determining the skew error comprises determining positions for each of the plurality of locator marks.

3. The system of claim 2, wherein determining the skew error further comprises:
fitting a line through two or more locator marks; and
computing average slope values.

4. The system of claim 3, wherein the average slope values comprise an average of slopes of the fitted lines.

5. The system of claim 3, wherein the fitted line is fit through center positions of the two or more locator marks.

6. The system of claim 5, wherein determining the skew error further comprises computing a skew error based on the average slope.

7. The system of claim 6, wherein the one or more pel forming assemblies comprise one or more printhead arrays and the skew error comprises a distance deviation between a center of a first printhead and a center of a second printhead.

8. The system of claim 6, wherein the one or more pel forming assemblies comprise a plurality of printheads and the skew error comprises a difference between the off-center deviation of one of the plurality of printheads to the off-center deviation of another one of the plurality of printheads.

9. The system of claim 3, wherein determining the skew error further comprises converting the average slope to an angle.

10. The system of claim 9, wherein determining the skew error further comprises computing a crosshair deviation as a skew error based on the angle.

11. The system of claim 1, further comprising a printer to apply the plurality of locator marks to the print medium.

12. A method comprising:
receiving a print image comprising a plurality of locator marks applied to a print medium by one or more pel forming assemblies comprising a plurality of pel forming elements;
analyzing the plurality of locator marks to determine a skew error of the one of more pel forming assemblies based on the plurality of locator marks; and
generating a skew error compensation value to minimize the skew error,
wherein the skew error compensation value comprises a compensation amount to be applied to the one or more pel forming element assemblies to compensate for the skew error.

13. The method of claim 12, wherein determining the skew error comprises determining positions for each of the plurality of locator marks.

14. The method of claim 13, wherein determining the skew error further comprises:
fitting a line through two or more locator marks; and
computing average slope values.

15. The method of claim 14, wherein the average slope values comprise an average of slopes of the fitted lines.
